# EUROPEAN PATENT APPLICATION

(11) **EP 3 138 886 A1**
(43) Date of publication of application: **08.03.2017**
(21) Application number: 15183469.4
(22) Date of filing: 02.09.2015
(51) Int. Cl.: C09J 5/00, C09J 11/02, C09J 163/10, C09J 167/06, C09J 175/14, C09J 201/08, B81C 3/00, B44C 3/12, B44C 1/28, E04F 15/16, B32B 7/12, E04F 15/08

(54) **METHOD FOR GLUING INVOLVING THE USE OF A RADIATION CURABLE ADHESIVE COMPOSITION COMPRISING SHORT FIBERS**

(71) Applicant: Allnex Belgium S.A., 1070 Anderlecht (BE)
(72) Inventor: VIEIRA, Paulo, Ponta Grossa - Paraná CEP 84.050-110 (BR); CAPPELLE, Steven, B - 9400 Ninove (BE); VANMEULDER, Guido, B - 1640 Sint-Genesius-Rode (BE)
(74) Representative: Destryker, Elise Martine

(57) **Abstract**

The present patent application relates to a method for gluing two adjacent substrates together by using a radiation curable adhesive composition and a use of a radiation curable adhesive composition for gluing.

In particular, the method for gluing involves the use of a radiation curable adhesive composition which comprises from 0.1 wt.% to 30 wt.% of fibers compared to the total weight of the radiation curable adhesive composition, wherein the fibers have a length comprised from 100 microns to 50 mm.

## Description

### Technical field

The present invention relates to a method for gluing two adjacent substrates together by using a radiation curable adhesive composition and a use of a radiation curable adhesive composition for gluing.

### Background

Volatile organic compounds (VOCs) are well known to be deleterious to the health of humans. Reducing the amount of VOCs present in the environment and especially indoor is thus highly desirable. In order to minimize the amount of VOCs, the use of green technology may be implemented. However, this should not lead to a decrease of the quality.

To the adhesive area, the formulation of typical adhesives often results in the emissions of a significant quantity of VOCs. This can be a significant disadvantage in case these adhesives are intended to be used indoor. Furthermore, for specific applications, the adhesion properties have to be very high.

For instance, regarding wall decoration elements such as tiles or stones, it is sometimes necessary to gather and to glue several of these wall decoration elements together in order to form a set. In this case, the adhesion requirement is very demanding. Indeed, the weight and the shape of these decoration elements make their adhesion together complicated. The preparation of sets of wall decoration elements may be desirable in order to facilitate their installation for example on the wall, the ceiling or the floor. In fact, the arrangement of sets of wall decoration elements, ready to be installed, avoids a long and tedious installation (namely decoration element by decoration element).

In order to satisfy this kind of adhesion requirement, the use of the polyvinyl chloride (PVC) resins as adhesive is the most commonly reported. In particular, PVC resins are used to stick together ceramic tiles by dot-gluing in order to form sets. The dot-gluing method involves gluing several elements together, such as tiles, by including a dot of adhesive between each element in order to form a bond between them. Although this leads to a satisfying and long-term gluing, the use of PVC resins also shows several drawbacks.

Indeed, the use of PVC resins in adhesives generates chlorine emanations over the long term. The repeat inhalation of chlorine exposure may affect the respiratory system and irritates the eyes and the skin. In addition, chlorine causes environmental harm at low levels. The use of PVC resins as glue in a dot-gluing method, also involves a heating step of at least 33 minutes at a temperature of 170°C. Furthermore, this involves the use of 200 meters length oven which is expensive in terms of energy. This implies high energy cost and further it is difficult to maintain the oven at a constant temperature. The application of a high temperature may also affect the appearance of the product to be glued for example in case of colored ceramic tiles, the color may be modified. The gelling time of PVC resins is long. In addition, a cooling step before packaging the products glued with PVC resins is required which significantly extends the time of production and which implies to store the products.
In view of this, there is a need to find an alternative to PVC resins in adhesives.

Several radiation curable adhesives have already been disclosed in prior art. Haddon et al has reviewed the different kinds of UV-cured resins commonly used as adhesives in the industry ("The Chemistry and applications of UV-cured adhesives", INT. J.ADHESION AND ADHESIVES VOL. 11 NO.3, July 1991). This document refers to three main UV-curable resins useful in adhesive compositions namely: acrylates (such as epoxy acrylates, urethane acrylates, polyester and polyether acrylate etc...), thiol/polyene resins and cationically cured resins.
For instance, US2002/0144771 discloses a photocurable adhesive composition which includes a photocurable adhesive resin and an effective amount of a ceramic-containing modifier.

However, thus far, none of the known radiation curable adhesive compositions show sufficient satisfying properties to replace the PVC resins as adhesive and especially in dot-gluing method.

Thus, there is a need to develop a method for gluing involving the use of radiation curable adhesive compositions which does not release harmful emanations, which is not time consuming, which is cost efficient and which provides excellent adhesive and cohesive properties even for very demanding applications.

### General description of the invention

In order to overcome the above-mentioned technical problem, the present invention provides:
A method for gluing comprising the steps of:
   - Providing at least two adjacent substrates,
   - Providing a radiation curable adhesive composition, preferably a UV-curable adhesive composition, which comprises from 0.1 wt.% to 30 wt.% of fibers compared to the total weight of the radiation curable adhesive composition, wherein the fibers have a length comprised from 100 microns (=0.10 mm) to 50 mm,
   - Contacting the at least two adjacent substrates with the radiation curable adhesive composition, and
   - Exposing the at least two adjacent substrates and the radiation curable adhesive composition to radiation, preferably UV-radiation, until the radiation curable adhesive composition is cured in order to bond the at least two adjacent substrates together (i.e. in order to form a bond between the at least two adjacent substrates).

The term "radiation curable adhesive composition" stands for a composition which can be cured under exposition to radiation and which shows adhesive properties after the curing step allowing bonding two substrates. Various types of radiation can be used such as ultraviolet (UV) radiation, gamma radiation, and electron beam. Preferred radiation is ultraviolet (UV) radiation. Ultraviolet radiation may preferably be comprised from about 400 nm to about 100 nm.
The term "Ultraviolet (UV)-curable adhesive composition" stands for a composition which can be cured under exposition to UV radiation and which shows adhesive properties after the curing step allowing bonding two substrates.

In the context of the present invention, the radiation curable adhesive composition comprises at least one radiation curable resin and from 0.1 wt.% to 30 wt.% of fibers compared to the total weight of the radiation curable adhesive composition, wherein the fibers have a length comprised from 100 microns to 50 mm.

According to an embodiment, the radiation curable adhesive composition is a UV-curable adhesive composition and comprises at least one UV-curable resin and from 0.1 wt.% to 30 wt.% of fibers compared to the total weight of the UV-curable adhesive composition, wherein the fibers have a length comprised from 100 microns to 50 mm.

The term "radiation curable resin" refers to a composition comprising at least one oligomer and/or at least one monomer which can be cured under the effect of radiation. The radiation being for instance actinic radiation such as ultraviolet (UV) radiation, gamma radiation, and electron beam.
The term "UV-curable resin" refers to a composition comprising at least one oligomer and/or at least one monomer which can be cured under the effect of UV light (UV radiation).

The term "fiber" (or fibrous material) refers to a thread or a filament which can be animal-based (protein), plant-based (cellulosic), mineral-based (glass or metal) or synthetic-based. In the context of the invention, the implemented fibers are "chopped" or "short" which means that their length does not exceed 50 mm. For example, the fibers may be obtained from longer fibers (namely showing a length superior to 50 mm) which have been cut or chopped in shorter fibers (namely with a length which does not exceed 50 mm).

The term "adjacent substrates" refers to substrates which are arranged next to each other (i.e. adjoining each other), preferably side by side.

The step of "exposing the at least two adjacent substrates and the radiation curable adhesive composition to radiation" corresponds to a curing step. According to one embodiment, the curing step is conducted by exposing the at least two adjacent substrates and the radiation curable adhesive composition to UV-radiation.

The presence of fibers with a length from 100 microns to 50 mm in an amount comprised from 0.1 wt.% to 30 wt.% compared to the total weight of the radiation curable adhesive composition provides to the radiation curable adhesive composition an ideal balance between flexibility property and strength (resistance) property. Indeed, the radiation curable adhesive composition after the curing step is flexible and thus the bond formed is not brittle. Furthermore, the specific amount and the determined length of the fibers comprised in the radiation curable adhesive composition prevent the radiation curable adhesive composition, when cured, from tearing apart when it is submitted to a pressure stress or a strength stress, for instance when being handled.

Indeed, the specific amount of short fibers allows reinforcing the bond formed by the radiation curable adhesive composition without hardening it too much. In case the radiation curable adhesive composition would be too hard after the curing step, this would render the bond too brittle and thus leads to an unsatisfying resistance of the bond between the at least two substrates. The specific length of the fibers allows a uniform distribution of the fibers in the radiation curable adhesive composition. The fibers form a network in the radiation curable adhesive composition which ensures the cohesion of the bond formed by radiation curable adhesive composition. This imparts to the bond formed with the method for gluing according to the invention sufficient flexibility and resistance for being used instead of PVC resins, in very demanding applications such as dot-gluing of decoration elements (e.g. tiles).

Furthermore, the method for gluing according to the present invention provides with several significant advantages compared to the method for gluing involving PVC resins.

First, the radiation curable adhesive composition does not require a gelling time and can be instant dried by the exposure to the radiations and in particular by the exposure to the UV-light. This allows reducing significantly the production time. In addition, the method for gluing according to the invention is low energy consumption since it is not required to use an oven at constant temperature and shorten the production line.

Another unexpected advantage, due to the fact of absence of heating, is that the substrates glued with the method for gluing according to the invention may be packed and shipped directly at the end of the production line. In fact, there is no need to wait for the cooling of the glued products. This allows saving time and room since there is no need to store the products when cooling. Moreover this also prevents from deteriorating the appearance of the substrates due to the heating, which is important, especially when the substrates to be glued are decoration elements.

At last but not the least, the method for gluing according to the invention involves the use of a radiation curable adhesive composition, preferably UV-curable adhesive composition, which releases no or only a limited amount of VOCs.

Another aspect of the invention is the use of a radiation curable adhesive composition, preferably a UV-curable adhesive composition, comprising from 0.1 wt.% to 30 wt.% of fibers compared to the total weight of the radiation curable adhesive composition, wherein the fibers have a length comprised from 100 microns to 50 mm for gluing, e.g. for gluing at least two adjacent substrates together.

Another aspect of the invention is a set of at least two adjacent substrates which are glued together with a radiation curable adhesive composition, preferably a UV-curable adhesive composition, comprising from 0.1 wt.% to 30 wt.% of fibers compared to the total weight of the radiation curable adhesive composition, wherein the fibers have a length comprised from 100 microns to 50 mm for gluing at least two substrates together. According to a preferred embodiment, the set of at least two adjacent substrates is a tiles laminate.

### Brief description of the figures

- Fig. 1: Schematic representation of a specific embodiment of the method for gluing according to the invention.
- Fig.2: Picture of a set of substrates glued together with the method for gluing according to the invention.

### Detailed description of the invention

The present invention proposes a method for gluing involving the use of radiation curable adhesive composition, preferably a UV-curable adhesive composition, which comprises from 0.1 wt.% to 30 wt.% of fibers compared to the total weight of the radiation curable adhesive composition, wherein the fibers have a length comprised from 100 microns to 50 mm. This results in, after curing, the formation of a bond of glue which is flexible enough and resistant as well to replace the use of PVC resins in demanding applications such as for example, dot-gluing methods.

The method for gluing according to the present invention comprises the steps of:
- Providing at least two adjacent substrates,
- Providing a radiation curable adhesive composition, preferably a UV-curable adhesive composition, which comprises from 0.1 wt.% to 30 wt.% of fibers compared to the total weight of the radiation curable adhesive composition, wherein the fibers have a length comprised from 100 microns to 50 mm,
- Contacting the at least two adjacent substrates with the radiation curable adhesive composition, and
- Exposing the at least two adjacent substrates and the radiation curable adhesive composition to radiation, preferably UV-radiation, until the radiation curable adhesive composition is cured in order to bond the at least two adjacent substrates together (in other words, in order to form a bond between the at least two adjacent substrates).

According to one embodiment, the method for gluing is a method for dot-gluing. This involves that the radiation curable adhesive composition, preferably the UV-curable adhesive composition, is applied under the form of at least one dot (or drop). The term "dot" (or drop) refers to a spot of radiation curable adhesive composition, preferably a defined round spot. The at least one dot of radiation curable adhesive composition may show various shapes taking into account the characteristics (shapes, weight, size, etc...) of the substrates which have to be glued together.
The dots of radiation curable adhesive composition comprise preferably a defined amount of radiation curable adhesive composition. The quantity of radiations curable adhesive composition is generally defined in view of the weight and size of the substrates to be glued. The at least one dot of radiation curable adhesive composition preferably comprise an amount of radiation curable adhesive composition which may be comprised from 0.05 to 20 grams/dot, more preferably from 0.10 to 10 grams/dot and in particular from 0.15 to 0.20 grams/dot.
The dots of radiation curable adhesive composition form the bond between the at least two adjacent substrates (or in other words allow bonding together the at least two adjacent substrates). The dots of radiation curable adhesive composition can be made preferably of radiation curable adhesive composition excluding any other compounds.

The at least two adjacent substrates which are intended to be glued by the method for gluing according to the present invention may be, for instance, any elements suitable for lining or covering a wall, ceiling or floor (for example like decoration elements or insulation elements) and in particular may be selected from the group consisting of tiles, stones and chips. The preferred substrates are ceramic tiles. The substrates to be glued may be identical or different from each other.

According to one embodiment, the method for gluing according to the present invention comprises the step of: providing a carrier, preferably a radiation transparent carrier, and more preferably a UV-light (or UV-radiation) transparent carrier.
The term "radiation transparent" means that the carrier is made of a material which allows the radiations to pass through. The radiation being for instance actinic radiation such as ultraviolet (UV) radiation, gamma radiation, and electron beam. The term "UV-light transparent" means that the carrier is made of a material which allows the UV-light (or UV-radiation) to pass through.

The carrier may be preferably a release carrier, preferably a radiation transparent release carrier, which means that the carrier may be removable. In this case, it means that the carrier may be removed after the curing step.

Advantageously, the carrier is a film or sheet. The carrier can be made of PVC, polycarbonate, polyethylene, polypropylene, polyethylene terephthalate (PET), polyester and mixture thereof. The carrier may be preferably an unmolding agent made, for example, of silicone. The carrier may have a thickness preferably from 10 to 500 micrometers, more preferably from 20 to 200 micrometers and in particular from 50 to 100 micrometers.

The method for gluing according to the invention may also comprise the step of applying the radiation curable adhesive composition on the carrier, preferably on the radiation transparent carrier, under the form of at least one dot (or drop), preferably on one surface (side) of the carrier. The radiation curable adhesive composition may preferably be applied by a pre-heated robot arm on the carrier.

The at least one dot of radiation curable adhesive composition is applied preferably on the carrier, preferably on the radiation transparent carrier, in such a way that, when contacted with the at least two substrates, the at least one dot is located in a gap between the at least two adjacent substrates.
The term "gap" means, in the context of the present invention, the space which may exist between two adjacent substrates.

According to one embodiment, the at least two adjacent substrates are then contacted with the at least one dot of radiation curable adhesive composition on the carrier, preferably on the radiation transparent carrier. In a preferred way, the at least two adjacent substrates may be arranged on-top of the at least one dot of radiation curable adhesive composition. The at least two adjacent substrates may preferably arranged in such a way that there is a gap between the at least two adjacent substrates. The at least one dot of radiation curable adhesive composition is preferably located in the gap between the at least two adjacent substrates. Advantageously, at least one dot of radiation curable adhesive composition is located in every gap between two adjacent substrates and forms a bond between the two adjacent substrates.

According to one embodiment the gap between two adjacent substrates (e.g. tiles) is comprised from 0.10 mm to 10 mm, preferably from 1 mm to 8 mm and most preferably from 2 to 4 mm.

The at least two substrates may be preferably arranged on-top of the at least one dot of radiation curable adhesive composition by automatic systems, for example automatic suckers.

Then, the substrates and the radiation curable adhesive composition are submitted to radiation (this step corresponds to the curing step). The curing step is performed by submitting the radiation curable adhesive composition to at least one radiation source or radiation emitter (for example a UV-light source or UV-light emitter). After the curing step, at least one dot of radiation curable adhesive composition forms a bond between at least two adjacent substrates, allowing maintaining the at least two adjacent substrates glued together. The method for gluing according to the present invention allows obtaining well-controlled gaps between every substrate.

Various types of actinic radiation can be used such as ultraviolet (UV) radiation, gamma radiation, and electron beam. A preferred means of radiation curing is ultraviolet radiation. Any ultraviolet light source, as long as part of the emitted light can be absorbed by the photoinitiator (system), may be employed as a radiation source. According to one embodiment, the UV radiations are UV-A, UV-B, UV-C and/or UV-V radiations. The UV light source may be preferably selected from the group consisting of high or low pressure gallium lamps, mercury lamps, a cold cathode tube, xenon lamp, a black light, an UV LED, a UV laser and a flash light. The UV light source is preferably high or low pressure mercury lamps with a typical UV dose from 400 mJ/cm to 4000 mJ/cm.

Advantageously, two radiation sources (or radiation emitters) may be used and arranged from either side of the carrier in order to emit radiations on the both sides of the carrier. This is especially advantageous when the carrier is radiation transparent and in particular UV-light transparent. According to one embodiment, the two radiation sources are UV light sources (or UV light emitters). In other words, one radiation source may be installed in front of the surface (side) of the radiation transparent carrier where the at least two substrates and the radiation curable adhesive composition are arranged and another radiation source may be installed in front of the other surface (side) of the radiation transparent carrier (namely the one where the substrates and the radiation curable adhesive composition are not located). This allows accelerating the curing of the radiation curable adhesive composition. Indeed, according to the specific embodiment when the carrier is radiation transparent, the radiation (preferably UV-radiation) can pass through it and the radiation curable adhesive composition may be cured of both sides.

According to one embodiment of the present invention, the method for gluing may comprise the following steps:
- Providing at least two adjacent substrates,
- Providing a radiation curable adhesive composition, preferably a UV-curable adhesive composition which comprises from 0.1 wt.% to 30 wt.% of fibers compared to the total weight of the radiation curable adhesive composition, wherein the fibers have a length comprised from 100 microns to 50 mm,
- Providing a carrier, preferably a radiation transparent carrier, more preferably a UV-light transparent carrier,
- Applying the radiation curable adhesive composition under the form of at least one dot on at least one surface of the carrier,
- Contacting the at least two adjacent substrates with the at least one dot of radiation curable adhesive composition on the carrier in such a way that there is a gap between the at least two adjacent substrates and that the at least one dot of radiation curable adhesive composition is located in the gap between the at least two adjacent substrates, and
- Exposing the at least two substrates and the at least one dot of radiation curable adhesive composition to radiation, preferably UV radiation (or UV light), until the radiation curable adhesive composition is cured in order to bond the at least two adjacent substrates together (in other words, in order to form a bond between the at least two adjacent substrates).

In particular, the method for gluing according to the invention may be implemented as a line production. A line production is a set of sequential operations. A conveyor set may be preferably used in order to implement the method for gluing as a line production. The speed of the conveyor set will be determined by the curing dose needed in order to cure the radiation curable adhesive composition. The curing dose may vary according to the constituents of the radiation curable adhesive composition, the thickness of the radiation curable adhesive composition and the active energy ray source used. Usually the speed of the conveyor set may be preferably comprised from 2 to 20 meters/minute, more preferably from 3 to 15 meters/minute and most preferably from 5 to 10 meters/minute. In particular, the conveyor set may preferably be implemented with a power comprised from 20 to 250 Watt/cm, preferably from 30 to 120 Watt/cm, and most preferably from 40 to 80 Watt/cm.

One embodiment of the invention is that the carrier, preferably the radiation transparent carrier, is set up on the line of production by being arranged on a transparent plate, which may be for example a quartz glass plate. The radiation, preferably UV light, emitted by the radiation source, preferably UV light source, may also pass through this transparent plate.

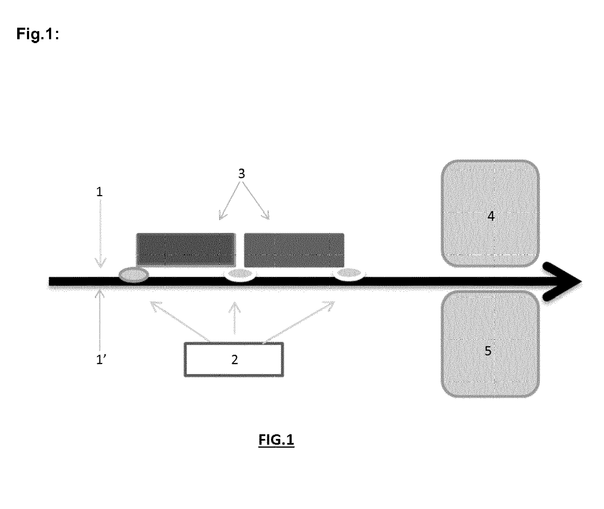

Fig.1 shows a schematic representation of a specific embodiment of the method for gluing according to the present invention. A UV-light transparent release carrier (1) is provided and set up on a transparent plate of a production line (1'). The speed of the production line is preferably comprised from 5 to 10 meters/minute which allows implementing the method for gluing as sequential operations. A UV-curable adhesive composition which comprises from 0.1 wt.% to 30 wt.% of fibers compared to the total weight of the UV-curable adhesive composition, wherein the fibers have a length comprised from 100 microns to 50 mm is applied on one surface of the UV-light transparent release carrier (1) under the form of dots (2). Tiles (3) intended to be bonded are provided as substrates. Tiles (3) are preferably ceramic tiles. Tiles (3) are arranged on the same surface of the UV-light transparent release carrier (1) than the dots of the UV-curable adhesive composition (2). Tiles (3) are contacted with the dots of UV-curable adhesive composition (2). The dots of UV-curable adhesive composition (2) are arranged on the surface of the UV-light transparent release carrier (1) in such a way that they are located in the gap between two adjacent tiles (3), namely two tiles (3) which are arranged side by side. In particular, at least one dot of the UV-curable adhesive composition (2) is located in the gap between two adjacent tiles (3). This specific arrangement of the dots of UV-curable adhesive composition (2) and the tiles (3) allows obtaining a well-controlled gap between the tiles (3). Then, the arrangement of the tiles (3), the dots of the UV-curable adhesive composition (2) and the UV-light transparent release carrier (1) is then submitted to UV-radiation emitted by two UV lamps (4 and 5). The UV lamps are arranged from either side of the UV-light transparent release carrier (1). As a result, the dots of UV-curable adhesive composition (2) may be cured from both sides, namely they can be cured by UV-radiations coming from above and from below the transparent release carrier (1). The dots of UV-curable adhesive composition (2) are instant dried under the activity of the UV-radiations emitted from the UV-lamps (4 and 5). At the end of the curing step, the tiles (3) are bonded at well-controlled gap by the cured dots of UV-curable adhesive composition (2). The tiles (3) glued with the dots of UV-curable adhesive composition (2) may be packed directly after the curing step since no cooling time is required.

The radiation curable adhesive composition useful for the method for gluing according to the present invention comprises from 0.1 wt.% to 30 wt.% of fibers (or fibrous material) compared to the total weight of the radiation curable adhesive composition, wherein the fibers have a length comprised from 100 microns to 50 mm.

According to one embodiment of the present invention, the radiation curable adhesive composition comprises from 0.1 wt.% to 30 wt.% of fibers, preferably from 1 wt.% to 10 wt.% and more preferably from 2 wt.% to 5 wt.% compared to the total weight of the radiation curable adhesive composition. This specific amount of fibers does not result in a high hardening of the radiation curable adhesive composition after the curing. Indeed, higher amount of fibers would lead to render the radiation curable adhesive composition brittle. In fact, after curing, the radiation curable adhesive composition still shows a high flexibility. Indeed, the amount of the fibers does not increase the T-bending resistance which means that the radiation curable adhesive composition remains flexible even after the curing step and lowers the mechanical properties. Furthermore, the specific length of the fibers which is from 100 microns to 50 mm allows avoiding the tearing of the cured radiation curable adhesive composition when handling. This is due to the fact that the fibers from a network in the radiation curable adhesive composition which ensures the cohesion of the radiation curable adhesive composition after curing.
In particular, the length of the fibers may be preferably comprised from 0.20 mm to 15 mm and more preferably from 1 mm to 10 mm and most preferably from 2 mm to 6 mm.

Advantageously, the fibers may be animal-based fibers (such as protein fibers), plant-based fibers (such as cellulosic fibers), mineral-based fibers, synthetic fibers or any mixtures thereof.

In particular, the fibers may be selected from the group consisting of byssus fibers, chiengora fibers, qiviut fibers, yak fibers, rabbit fibbers, wool fibers, lambswool fibers, cashmere wool fibers, mohair wool fibers, camel hair fibers, alpaca wool fibers, vicuña wool fibers, guanaco wool fibers, lama wool fibers, angora wool fibers, silk fibers, abaca fibers, coir fibers, cotton fibers, flax fibers, jute fibers, kapok fibers, kenaf fibers, raffia fibers, bamboo fibers, hemp fibers, modal fibers, piña fibers, ramie fibers, sisal fibers, soy protein fibers, fiberglass, metals fibers, rayon fibers, acetate fibers, Tencel® fibers (sub-category of rayon, semisynthetic), polyester fibers, aramid fibers, acrylic fibers, Ingeo® fibers (Polylactic acid (PLA) biopolymers), Luminex® fibers (fiber optics), Lurex® fibers (fibers with metallic appearance coming from polyamide and/or polyester), lyocell fibers, nylon® (polyamide) fibers, spandex® (elastane) fibers, Lycra® (elastane) fibers, polylactic acid (PLA) fibers, and any mixtures thereof.

According to one embodiment, the fibers are selected from the group consisting of mineral based-fibers, synthetic fibers and any mixtures thereof. The fibers may be preferably selected from the group consisting of fiberglass, metals fibers, rayon fibers, acetate fibers, Tencel® fibers (sub-category of rayon, semisynthetic), polyester fibers, aramid fibers, acrylic fibers, Ingeo® fibers (PLA biopolymers), Luminex® fibers (fiber optics), Lurex® fibers (fibers with metallic appearance coming from polyamide and/ or polyester), lyocell fibers, nylon® (polyamide) fibers, spandex® (elastane) fibers, Lycra® (elastane) fibers, polylactic acid (PLA) fibers, and any mixture thereof.

In particular, the fibers may preferably be selected from the group consisting of fiberglass, synthetic fibers such as rayon fibers, acetate fibers, Tencel® fibers (sub-category of rayon, semisynthetic), polyester fibers, aramid fibers, acrylic fibers, Ingeo ® fibers (PLA biopolymers), Luminex ® fibers (fiber optics), Lurex® fibers (fibers with metallic appearance coming from polyamide and/ or polyester), lyocell fibers, Nylon® (polyamide) fibers, Spandex® (elastane) fibers, lycra® (elastane) fibers, polylactic acid (PLA) fibers and any mixture thereof.

According to a specific embodiment, the most preferably fibers are selected from the group consisting of: fiberglass, polyester fibers, Nylon® (polyamide) fibers, polypropylene fibers and any mixtures thereof.

According to one embodiment, the radiation curable adhesive composition, which is preferably a UV-curable adhesive composition, comprises at least one radiation curable resin, which is preferably a UV-curable resin and more preferably a 100% UV-curable resin.

The radiation curable adhesive composition may preferably comprise from 70 wt.% to 99.9 wt.%, more preferably from 90 wt.% to 99 wt.% and most preferably from 95 wt.% to 98 wt.% of a radiation curable resin, preferably a UV-curable resin compared to the total weight of the radiation curable adhesive composition.

The radiation curable resin comprises at least one oligomer and/or at least one monomer. The radiation curable resin may preferably comprise at least one (meth)acrylated oligomer and/or at least one (meth)acrylated monomer. According to a specific embodiment, the radiation curable resin consists of at least one (meth)acrylated oligomer and/or at least one (meth)acrylated monomer.

The (meth)acrylated oligomers are typically composed of only a few monomer units such as a dimer, trimer, tetramer etc. They may typically be defined as being composed of repeating monomer units and as having a molecular weight (MW) between 500 and 20,000 Daltons.

Examples of (meth)acrylated oligomers that can be used in the present invention include polyester (meth)acrylates, polyether (meth)acrylates), polycarbonate (meth)acrylate, (poly)urethane (meth)acrylates, epoxy (meth)acrylates and amino (meth)acrylate oligomers, or mixtures thereof. In particular, the acrylated forms are preferred. The (meth)acrylate oligomers are preferably having a molecular weight of from 500 to 5000 Dalton. The (meth)acrylate oligomers typically comprise at least 2 functional groups per molecule.

Polyester (meth)acrylate oligomers are well known. These (meth)acrylated polyesters can be obtained by reacting a hydroxyl group-containing polyester backbone with (meth)acrylic acid, or by reacting a carboxyl group-containing polyester backbone with a hydroxyalkyl (meth)acrylate such as for example 2-hydroxyethyl acrylate, 2- or 3-hydroxypropyl acrylate, etc. or with glycidyl (meth)acrylate. The polyester backbone can be obtained in a conventional manner by polycondensation of at least one polyhydroxy alcohol, such as ethylene glycol, propylene glycol, butanediol, neopentyl glycol, hexanediol, trimethylolpropane, bisphenol A, pentaerythritol, etc, or/and the ethoxylates and/or propoxylates thereof, with at least one polycarboxylic acid or anhydride thereof such as adipic acid, phthalic acid, isophthalic acid, terephthalic acid, trimellitic acid, etc. By using unsaturated compounds for the polyester synthesis, such as for example fumaric acid, maleic acid, itaconic acid, etc., polyesters bearing both (meth)acrylic and ethylenic unsaturations in the polymer chain, can be obtained. In addition polylactones and/or polylactides can be used as polyester backbone. For example poly(ε-caprolactone), polylactide and/or poly(lactide,caprolactone) can be obtained by ring-opening polymerization of ε-caprolactone and/or lactide optionally in the presence of one or more polyhydroxy alcohols. Preferred are the polyester (meth)acrylate oligomers commercialized as EBECRYL® 450, EBECRYL® 452, EBECRYL® 860, and EBECRYL® 870 available from Allnex.

Polyether (meth)acrylate oligomers can be prepared by esterification of hydroxyfunctional polyethers with (meth)acrylic acid. Hydroxyfunctional polyethers can be obtained by ring-opening homo- or copolymerization of cyclic ethers such as tetrahydrofuran, ethylene oxide and/or propylene oxide, or can be prepared by reacting polyhydroxy alcohols with ethylene and/or propylene oxide.

Polycarbonate (meth)acrylate oligomers are known. They can be prepared by esterification of hydroxyfunctional polycarbonates with (meth)acrylic acid.

(Poly)urethane (meth)acrylate oligomers can be prepared by reacting a di- and/or polyisocyanate, such as hexamethylene-diisocyanate, isophorone-diisocyanate, toluene-diisocyanate, with hydroxyl functional (meth)acrylate. Use can be made exclusively of hydroxyl functional (meth)acrylates such as those mentioned above, but in order to extend the chain, mono- or polyhydroxy alcohols can also be added, such as those mentioned above for the synthesis of polyesters polyesters, polyethers or polycarbonates containing hydroxyl groups.
Examples of suitable (poly)urethane(meth)acrylates include those commercialized under the names EBECRYL® 204, EBECRYL® 205, EBECRYL® 210, EBECRYL® 230, EBECRYL® 270, EBECRYL® 4175, EBECRYL® 8232, EBECRYL® 8807, EBECRYL® 6202 available from Allnex.

By epoxy (meth)acrylate oligomers is meant to designate the (meth)acrylic esters of epoxides, preferably polyepoxides, i.e. compounds comprising at least one, preferably at least two epoxide functions. Epoxy (meth)acrylate oligomers are generally obtained from the esterification reaction of (meth)acrylic acid with epoxides. The epoxides are generally chosen from epoxidized olefins, glycidyl esters of saturated or unsaturated carboxylic acids, glycidyl ethers of aromatic or aliphatic alcohols or polyols and from cycloaliphatic polyepoxides. Preferred epoxides are diglycidylethers of aromatic and aliphatic diols and cycloaliphatic diepoxides such as diglycidyl ether of bisphenol-A, diglycidyl ether of bisphenol-F, diglycidylether of poly(ethylene oxide-co-propylene oxide), diglycidylether of polypropylene oxide, diglycidylether of hexanediol, diglycidylether of butanediol. Particularly preferred is diglycidyl ether of bisphenol-A. Also epoxidized natural oils or epoxidized phenol-formaldehyde copolymers can be used. Examples of natural oils include soybean oil, linseed oil, perilla oil, fish oil, dehydrated castor oil, tung oil, coconut oil, corn oil, cottonseed oil, olive oil, palm oil, palm kernel oil, peanut oil, sunflower oil, safflower oil and castor oil.
Examples of suitable epoxy acrylates include EBECRYL® 860, EBECRYL® 3105, EBECRYL® 3708.

(Meth)acrylated (meth)acrylic oligomers can be obtained by first preparing a (meth)acrylic copolymer by copolymerization of (meth)acrylate monomers such as butyl acrylate with monomers containing pendant carboxylic acid, anhydride, hydroxy, glycidyl or isocyanate groups and by then reacting this copolymer with a monomer comprising at least one (meth)acrylate functional group and at least one carboxylic acid, anhydride, hydroxyl, glycidyl or isocyanate reactive groups. For example, a glycidyl group-containing copolymer can first be prepared by copolymerizing functionalized monomers such as glycidyl (meth)acrylate with other (meth)acrylate monomers, the said glycidyl group-containing polymer being usually reacted in a second step with (meth)acrylic acid. When the functionalized monomers are (meth)acrylic acid, the carboxyl group-containing polymer is generally reacted in the second step with glycidyl (meth)acrylate.

Optionally amino (meth)acrylates can be added as such to the composition of the invention. Aminoacrylate can be obtained by the addition reaction of a (meth)acrylate and an amine. Examples of suitable amino (meth)acrylates include EBECRYL® 7100, EBECRYL® 80, EBECRYL® 81, EBECRYL® 83, EBECRYL® 85, EBECRYL® LEO 10551, EBECRYL® LEO 10552 and EBECRYL® LEO 10553, all available from Allnex.

The radiation curable adhesive composition according to the invention may optionally comprise an inert resin, which does not take part in the polymerization reaction like the ones described in e.g. WO2002/38688, WO2005/085369, EP1411077 and US5919834. Examples of such optional inert resins typically include hydrocarbons (such as styrene based hydrocarbon resins), styrene allyl alcohol polymers, polyesters, styrene maleic anhydride polymers and halfesters thereof, (poly)urethane resins, polyethylenevinylacetate resins, polyvinylchloride resins, polyesters, chlorinated polyesters, polyvinyl butyraldehyde, polydiallylphtalate, chlorinated polyolefin resins and/or ketone resins. The total amount of such optional inert resins, possibly mixtures thereof, does usually not exceed 40% by weight, preferably this amount does not exceed 20% by weight, most preferably does not exceed 10% by weight based on the total weight of radiation curable adhesive composition. Even more preferable this amount does not exceed 5% by weight.

According to one embodiment of the present invention the at least one radiation curable resin comprises at least one (meth)acrylated oligomer which is selected from the group consisting of (poly)urethane (meth)acrylate oligomer, polyester (meth)acrylate oligomer, epoxy (meth)acrylate oligomer and any mixtures thereof.

According to one embodiment, the (meth)acrylated monomers may be monofunctional, difunctional, or trifunctional, tetrafunctional, pentafunctional or hexafunctional(meth)acrylate monomers. Representative examples of such monomers include but are not limited to: Acrylate monomer with carboxylic acid function such as 2-carboxyethyl acrylate, (meth)acrylic acid, ethylene glycol di(meth)acrylate, ethoxylated bisphenol A di(meth)acrylate esters, isosorbide di(meth)acrylate, tris(2-hydroxyethyl) isocyanurate tri(meth)acrylate as well as the di(meth)acrylate, alkyl (such as isobornyl, isodecyl, isobutyl, n-butyl, t-buyl, methyl, ethyl, tetrahydrofurfuryl, cyclohexyl, n-hexyl, iso-octyl, 2-ethylhexyl, n-lauryl, octyl or decyl) or hydroxy alkyl (such as 2-hydroxyethyl and hydroxy propyl) esters of acrylic acid or methacrylic acid, phenoxyethyl(meth)acrylate, nonylphenolethoxylate mono(meth)acrylate, 2-(-2-ethoxyethoxy)ethyl(meth)acrylate, 2-butoxyethyl(meth)acrylate, butyleneglycol di(meth)acrylate and tri(meth)acrylate, 1,6-hexanediol di(meth)acrylate, ethoxylated and/or propoxylated hexanediol di(meth)acrylate, tricyclodecanedi(meth)acrylate, tricyclodecanedimethanol di(meth)acrylate, pentaerythritol di(meth)acrylate and tri(meth)acrylate and tetra(meth)acrylate and the ethoxylated and/or propoxylated derivatives thereof, propylene glycol di(meth)acrylate, neopentyl glycol di(meth)acrylate, ethoxylated and/or propoxylated neopentylglycol di(meth)acrylate, hexamethylene glycol di(meth)acrylate, 4,4'-bis(2-acryloyloxyethoxy)diphenylpropane, di- or trimethylolpropane tri(meth)acrylate and the ethoxylated or/and propoxylated derivatives thereof, phenylglycidylether(meth)acrylate, the (meth)acrylates obtained from the esterification with (meth)acrylic acid of aliphatic glycidyl ethers.

The (meth)acrylated monomer may preferably be selected from the group consisting of:
- Monofunctionnal monomer: such as isobornyl acrylate (IBOA from Allnex), oxyethylated phenol acrylate (for example Ebecryl ® 110 from Allnex),
- Difunctional monomer: such as propoxylated neopentyl glycol diacrylate (for example Ebecryl ® 145 from Allnex), dipropylene glycol diacrylate (DPGDA, from Allnex) and
- Trifunctionnal monomer: such as acrylated glycerol derivative (OTA 480, from Allnex), and any mixtures thereof.

According to one embodiment, the amount of (meth)acrylated monomer in the radiation curable resin may be 95 wt.% or less, preferably 90 wt.% or less, more preferably, 85wt.% or less, yet more preferably 80 wt.% or less compared to the total weight of the radiation curable resin.

For instance, the amount of (meth)acrylated monomer in the radiation curable resin may be from 0 to 95 wt.% or from 0 to 80 wt.% compared to the total weight of the radiation curable resin.

In some embodiments, the amount of (meth)acrylated monomer if present in the radiation curable resin may be 1 wt.% or more, 10 wt.% or more, 25 wt.% or more, 40 wt.% or more, or 50 wt.% or more compared to the total weight of the radiation curable resin.

Any minimal amount cited above may be combined with any maximal amount cited above. For instance, the amount of (meth)acrylated monomer in the resin composition may be 1 wt.% or more and 80 wt.% or less compared to the total weight of the radiation curable resin.

The radiation curable adhesive composition may show before the curing step, a viscosity which is preferably comprised from 1 to 1000 Pa.s, at 25°C, at atmospheric pressure, shear rate 10.s⁻¹ method Plate-Plate PP25-2 (Ø 25*mm*), preferably from 2 to 500 Pa.s, more preferably from 5 to 100 Pa.s and most preferably from 10 to 50 Pa.s

The viscosity of the radiation curable adhesive composition before the curing step should allow obtaining a UV-curable adhesive composition which is liquid enough to be easily and precisely applied. However, the viscosity of the UV-curable adhesive composition should not be too low in order to prevent from unwanted drips or leakages.

According to one embodiment, the radiation curable adhesive composition may comprise at least one photoinitiator. The at least one photoinitiator should preferably provide with a dry-touch effect which means that the radiation curable adhesive composition is deeply cross-linked after the curing step.

The at least one photoinitiator may be preferably selected from the group consisting of α-hydroxyketones, α-aminoketones, benzildimethyl-ketals, acyl phosphines, benzophenone derivatives, thioxanthones and blends of these and more preferably is selected from the group consisting of α-hydroxyketones, benzophenone, acyl phosphines and any mixtures thereof and most preferably is selected from the group consisting of hydroxyketones, acyl phosphines and any mixtures thereof.

The radiation curable adhesive composition may preferably comprise from 0.1 wt.% to 10 wt.% of photoinitiator, more preferably 0.5 wt.% to 8 wt.% and most preferably from 2 wt.% to 5 wt.% compared to the total weight of the radiation curable adhesive composition.

The radiation curable adhesive composition may preferably show, after being cured, stiffness (Young modulus) at atmospheric pressure, comprised from 20 to 10000 MPa, preferably from 30 to 5000 MPa, more preferably from 50 to 2000 MPa and most preferably from 100 to 1000 MPa.

Advantageously, the radiation curable adhesive composition may also comprise fillers. Indeed, the presence of fillers allows controlling the viscosity of the radiation curable adhesive composition. The fillers may be selected from the group consisting of calcium carbonate, talc magnesium silicate, kaolin clay, aluminium silicate, bariumsulphate, aluminium hydroxide, silicium dioxide and any mixtures thereof. According to one embodiment, the fillers are selected from the group consisting of talc, kaolin clay, aluminium silicate, silicium dioxide and any mixtures thereof.

The radiation curable adhesive composition may comprise an amount of fillers which is preferably at most 30 wt.%, more preferably at most 20 wt.% and most preferably at most 10 wt.% compared to the total weight of the radiation curable adhesive composition. The radiation curable adhesive composition may comprise an amount of fillers which is comprised from 0.1 wt.% to 30 wt.%, and preferably from 2 wt.% to 20 wt.% and more preferably from 5 wt.% to 10 wt.% based on the total weight of the radiation curable adhesive composition.

When needed, the radiation curable adhesive composition may also comprise at least one optional additive. The additives are those commonly used, such as stabilizers, substrate wetting agents, anti- foam agents, alkoxysilanes, adhesion promoting agents, etc... and any mixtures thereof. The total amount of those additives does usually not exceed 5 wt.% of the total weight of the radiation curable adhesive composition.

The radiation curable adhesive composition used in the present invention after curing permit to obtain excellent adhesion on various organic and inorganic substrates such as plastic, metal, stone, ceramics, glass, wood and paper.

According to one embodiment, the radiation curable adhesive composition, which is preferably UV-curable adhesive composition, comprises from 0.1 wt.% to 30 wt.% of fibers compared to the total weight of the radiation curable adhesive composition, wherein the fibers have a length comprised from 100 microns to 50 mm, at least one radiation curable resin which is preferably a UV-curable resin, at least one photoinitiator and optionally at least one filler.

The present invention also refers to the use of a radiation curable adhesive composition comprising from 0.1 wt.% to 30 wt.% of fibers compared to the total weight of the radiation curable adhesive composition, wherein the fibers have a length comprised from 100 microns to 50 mm, as a glue. According to one embodiment, the radiation curable adhesive composition implemented in this use may comprise independently or in combination the previously mentioned technical features.

Another aspect of the invention is also a set of at least two adjacent substrates which are glued with radiation curable adhesive composition comprising from 0.1 wt.% to 30 wt.% of fibers compared to the total weight of the radiation curable adhesive composition.

The present invention also concerns a set of at least two adjacent substrates which are glued together with a method for gluing which comprises the steps of:
- Providing at least two adjacent substrates,
- Providing a radiation curable adhesive composition, which is preferably a UV-curable adhesive composition, which comprises from 0.1 wt.% to 30 wt.% of fibers compared to the total weight of the radiation curable adhesive composition, wherein the fibers have a length comprised from 100 microns to 50 mm,
- Contacting the at least two adjacent substrates with the radiation curable adhesive composition,
- Exposing the at least two adjacent substrates and the radiation curable adhesive composition to radiation, which are preferably UV-radiation (or UV-light), until the radiation curable adhesive composition is cured in order to bond the at least two adjacent substrates together (in other words, in order to form a bond between the at least two adjacent substrates).

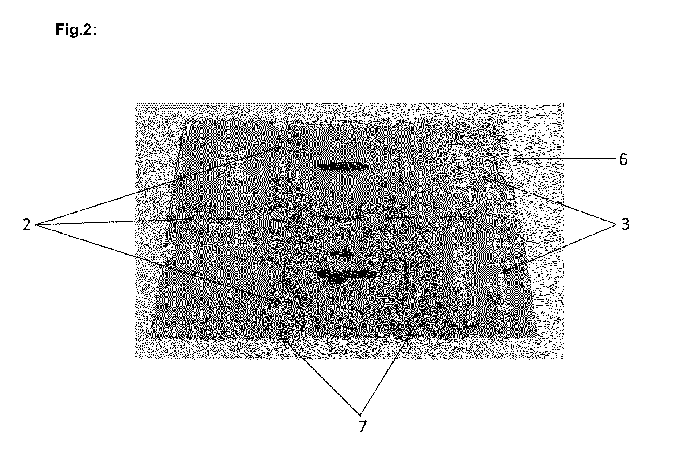

Fig.2 illustrates an embodiment of this aspect of the invention. Fig.2 shows a set of six substrates which are ceramic tiles (3) glued together by implementing the method for gluing according to the invention. This set of glued ceramic tiles (6) corresponds to a ceramic tiles laminate. The set of glued ceramic tiles (6) is arranged as follows: two rows of three ceramic tiles (3). Each of the ceramic tiles (3) is glued together with the adjacent ceramic tile (3). According to the embodiment of Fig.2, each ceramic tile (3) has three adjacent ceramic tiles (3). Each ceramic tiles (3) is glued with every of these adjacent ceramic tiles (3) via two dots of UV-curable adhesive composition (2) which comprise from 0.1 wt.% to 30 wt.% of fibers compared to the total weight of the UV-curable adhesive composition, wherein the fibers have a length comprised from 100 microns to 50 mm according to the method for gluing of the present invention. The dots of UV-curable adhesive composition (2) are located in the gap (7) between two adjacent ceramic tiles (3). This allows providing with a flexible and resistant bond between every ceramic tile (3). Furthermore, it can be seen on Fig.2 that the method for gluing according to the present invention allows obtaining well-controlled gap (7) between the ceramic tiles (3).

All the embodiments previously mentioned may be individually implemented or may combined within reason.

The invention is now further described in more details in the following examples, which in no way intend to limit the invention or its applications.

### Experimental data

### Examples 1 to 9

Examples 1 to 9 refer to sets of 2 tiles which are glued together by a method of dot-gluing. Table 1 describes the UV-curable adhesive composition used for each example. The UV-curable adhesive composition used in examples 1, 2, 6 and 8 do not comprise any fibers and thus examples 1, 2, 6 and 8 are comparative examples. Table 1 also describes the parameters of the method used for gluing at least two tiles, namely the amount of each component of the UV-curable adhesive composition, the curing speed (corresponding to the conveyor speed) and the power of the UV lamp.

### - Method for gluing two tiles together:

Two wall decoration ceramic tiles (square form, 10 cm X 10 cm, thickness of 8 mm) are glued together by using one of the compositions of examples 1 to 9. The two tiles are positioned at 0.5 cm from each other and glued together by applying two dots of UV-curable adhesive composition which comprise from 0.5 to 2 gram of UV-curable adhesive composition /dot and then are cured by UV-light according to the parameters described in table 1.

**- Table 1:**

| Examples | UV-curable adhesive composition | Weight parts in the formulation | Curing speed | UV lamp | UV dose |
|---|---|---|---|---|---|
| 1 | - Bisphenol A based epoxy acrylate | - 75 | 10m/min | 80W Ga lamp | 1000mJ/cm² |
| | - Phenoxy ethyl acrylate | - 25 | | | |
| | - Darocur® TPO | - 0.5 | | | |
| 2 | - Bisphenol A based epoxy acrylate | - 75 | 10m/min | 80W Ga lamp | 1000mJ/cm² |
| | - Phenoxy ethyl acrylate | - 25 | | | |
| | - Darocur® TPO | - 0.5 | | | |
| | - Aluminium (Al)-silicate filler | - 20 | | | |
| 3 | - Bisphenol A based epoxy acrylate | - 75 | 10m/min | 80W Ga lamp | 1000mJ/cm² |
| | - Phenoxy ethyl acrylate | - 25 | | | |
| | - Darocur® TPO | - 0.5 | | | |
| | - Al-silicate filler | - 20 | | | |
| | - 6 denier polypropylene (pp) fiber | - 1 | | | |
| 4 | - Bisphenol A based epoxy acrylate | - 75 | 10m/min | 80W Ga lamp | 1000mJ/cm² |
| | - Phenoxy ethyl acrylate | - 25 | | | |
| | - Darocur® TPO | - 0.5 | | | |
| | - Al-silicate filler | - 20 | | | |
| | - 6 denier pp fiber | - 2 | | | |
| 5 | - Bisphenol A based epoxy acrylate | - 75 | 10m/min | 40W Ga lamp | 750mJ/cm² |
| | - Phenoxy ethyl acrylate | - 25 | | | |
| | - Areosil® 380 | - 1 | | | |
| | - Darocur® TPO | - 0.5 | | | |
| | - Al-silicate filler | - 20 | | | |
| | - 6 denier pp fiber | - 0.5 | | | |
| 6 | - Aliphatic Urethane acrylate | - 80 | 10m/min | 40W Ga lamp | 550mJ/cm² |
| | - Isobornyl acrylate | - 10 | | | |
| | - Acrylate monomer with carboxylic acid function | - 10 | | | |
| | - Darocur® TPO | - 0.5 | | | |
| 7 | - Aliphatic Urethane acrylate | - 80 | 10m/min | 40W Ga lamp | 550mJ/cm² |
| | - Isobornyl acrylate | - 10 | | | |
| | - Acrylate monomer with carboxylic acid function | - 10 | | | |
| | - Darocur® TPO | - 0.5 | | | |
| | - 6 denier pp fiber | - 3 | | | |
| 8 | - Aromatic urethane acrylate | - 35 | 10m/min | 80W Ga+Hg lamp | 1800mJ/cm² |
| | - Bisphenol A based epoxy acrylate | - 35 | | | |
| | - Phenoxy ethyl acrylate | - 30 | | | |
| | - Darocur® 1173 | - 2 | | | |
| 9 | - Aromatic urethane acrylate | - 35 | 10m/min | 80W Ga+Hg lamp | 1800mJ/cm² |
| | - Bisphenol A based epoxy acrylate | - 35 | | | |
| | - Phenoxy ethyl acrylate | - 30 | | | |
| | - Darocur® 1173 | - 2 | | | |
| | - 6 denier pp fiber | - 30 | | | |

### - Photoinitiators:

Darocur ® TPO (2,4,6-Trimethylbenzoyl-diphenyl-phosphineoxide) (BASF Resins & Additives), Darocur ® 1173 (2-Hydroxy-2-methyl-1-phenyl-propan-1-one) (BASF Resins & Additives).

### - Aluminium-silicate filler:

Imercure™ X10 (Imerys Performance Minerals)

### - Hydrophilic fumed silica:

Areosil® 380 (Evonik).

### - The fibers:

The fibers used are 6 denier polypropylene (pp) fibers. The length of the fibers used in examples 1 to 9 is comprised from 3 to 6 mm.

### - UV-Curing:

The compositions of examples 1 to 9 are cured using a gallium lamp or a gallium doped mercury lamp at 40 or 80 W/cm power.

### - Test of resistance to tearing ("Swing" test):

The test of resistance to tearing is implemented by an operator. This test allows assessing the property of resistance to tearing of a material. The two tiles glued together according to examples 1 to 9 are bended 5 times from a plane to an angle of 180° between the two tiles by the operator. Afterward, the tiles are teared apart by the operator. The operator assesses the resistance of every bond formed by UV-curable adhesive composition, in view of the strength which he has to apply to tear apart the tiles. The results obtained are described in table 2.

**-Table 2:**

| Examples | Film integrity after the test of resistance to tearing |
|---|---|
| 1 | Very low |
| 2 | low |
| 3 | High |
| 4 | High |
| 5 | High |
| 6 | Low |
| 7 | High |
| 8 | Low |
| 9 | High |

### - Conclusion:

It appears that the film integrity obtained for examples 1, 2, 6 and 8 (comparative examples) is very low. On the opposite, the film integrity assessed for examples 3-5, 7 and 9 is high. It means that, for the examples according to the present invention, the two tiles are strongly glued together and cannot be easily separated. The specific amount of short fibers (0.5-3 parts by weight) allows maintaining the bonding between the tiles after the swing test. Without these fibers the coating immediately breaks when the tiles are pulled apart.

### - Examples 10-10d and examples 11 to 11d

Table 3 discloses the composition of examples (ex.) 10, 10a, 10b, 10c, 10d, 11, 11 a, 11 b, 11c, and 11 d. Examples 10, 10a, 10b, 10c and 10d show the same composition except that example 10 does not comprise short fibers whereas examples 10a, 10b, 10c, 10d comprise different amounts of short fibers, namely a quantity of short fibers comprised from 1 wt.% to 5 wt.% compared to the total weight of the UV-curable adhesive composition. In addition, examples 10b and 10c show the same composition and the same amount of short fibers, but the thickness of the tested film is different.

In the same way, examples 11, 11a, 11 b, and 11c show an identical composition except that example 11 does not comprise short fibers whereas examples 11 a, 11 b and 11c comprise an increased amount of short fibers, namely a quantity of short fibers comprised from 1 wt.% to 5 wt.% compared to the total weight of the UV-curable adhesive composition.
- Components:
   ∘ Oligomers:
- Modified epoxyacrylate (Ebecryl ® 3708, Allnex)
- Epoxyacrylate (Ebecryl ® 600, Allnex)
   ∘ Monomer:
- Trifunctional acrylate monomer (OTA 480, Allnex)
   ∘ Photinitiator:
- Darocure ® TPO (BASF Resins & Additives)
   ∘ Fibers:
- The short fibers are 6 denier polypropylene (pp) and have a length from 3 to 6 mm.

### - Preparation of the films:

The films to be tested were prepared by applying a layer of the compositions as defined in table 3 on a release carrier and by curing with UV-radiation (10m/min 80W Ga lamp). Table 3 specifies the composition and the thickness of each film tested.

### - Test methods:

Then, the films obtained have been submitted to two different kinds of test method:
- Conical mandrel test following ISO 1519 standard.
- T-bend test is performed by bending the free film on itself without release carrier.

The conical mandrel test allows precise determination of adhesion characteristics. In fact, the film to be tested is stretched through a gradient of distension.

The T-bend test allows determining the flexibility of a film.

The cured coating films were removed from the release carrier before measurement.

### - Results

The results obtained are described in table 3.

**- Table 3**

| Compositions | | | Film thickness in µm | Conical mandrel in mm cracks at | Results of T-bend test |
|---|---|---|---|---|---|
| Ex. 10 | Modified epoxyacrylate Trifunctional acrylate monomer Photoinitiator | Quantity of components: 60/40/0.6 | 300 | 2 | Break at T = 0 |
| Ex. 10a | | +1 wt% fibers | 300 | 2< | No break at T= 0 |
| Ex. 10b | | +2 wt% fibers | 300 | 2< | No break at T= 0 |
| Ex. 10c | | +2 wt% fibers | 475-520 | 2< | No break at T= 0 |
| Ex. 10d | | +5 wt% fibers | 220-250 | 2< | No break at T= 0 |
| Ex. 11 | Epoxyacrylate trifunctional acrylate monomer Photoinitiator | Quantity of components: 80/20/0.6 | 350 | 35 | Break T=0 |
| Ex. 11a | | +1 wt% fibers | 360-400 | 2< | No break at T= 0 |
| Ex. 11b | | +2 wt% fibers | 480-520 | 2< | No break at T= 0 |
| Ex. 11c | | +5 wt% fibers | 360-380 | 2< | No break at T= 0 |

### - Conclusion:

Examples 10 and 11 do not comprise short fibers. Examples 10 and 11 show weak results for both tests. On the opposite, examples 10a to 10d and examples 11 a to 11c all show excellent results for the conical mandrel test and the T-bend test. Thus, examples 10a to 10d and examples 11a to 11c have both excellent flexibility and adhesion properties. These results clearly show that the addition of the fibers allows increasing the integrity of the film. Especially when very brittle products are used (composition of example 11) even 1 wt% of fibers improves the film integrity.

## Claims

1. A method for gluing which comprises the steps of:
- Providing at least two adjacent substrates,
- Providing a radiation curable adhesive composition which comprises from 0.1 wt.% to 30 wt.% of fibers compared to the total weight of the radiation curable adhesive composition, wherein the fibers have a length comprised from 100 microns to 50 mm,
- Contacting the at least two adjacent substrates with the radiation curable adhesive composition, and
- Exposing the at least two adjacent substrates and the radiation curable adhesive composition to radiation until the radiation curable adhesive composition is cured in order to bond the at least two adjacent substrates together.

2. The method for gluing according to claim 1, wherein the radiation curable adhesive composition is a UV-curable adhesive composition and the radiation is a UV-radiation.

3. The method for gluing according to claim 1 or claim 2, which comprises the step of providing a radiation transparent carrier.

4. The method for gluing according to claim 3, which comprises the step of applying the radiation curable adhesive composition under the form of at least one dot on the radiation transparent carrier.

5. The method for gluing according to claim 4, wherein the at least one dot of radiation curable adhesive composition comprises an amount of radiation curable adhesive composition from 0.05 to 20 grams/dot.

6. The method for gluing according to claim 4 or claim 5, wherein the at least two adjacent substrates are contacted with the at least one dot of radiation curable adhesive composition on the radiation transparent carrier in such a way that there is a gap between the at least two adjacent substrates and that the at least one dot of radiation curable adhesive composition is located in the gap between the at least two adjacent substrates.

7. The method for gluing according to claim 6, wherein the gap between the at least two adjacent substrates has a length which is comprised from 0.1 mm to 10 mm.

8. The method for gluing according to any one of the preceding claims, wherein the at least two adjacent substrates are selected from the group consisting of: tiles, stones and chips.

9. The method for gluing according to any one of the preceding claims, wherein the fibers are selected from the group consisting of animal-based fibers, plant-based fibers, mineral-based fibers, synthetic fibers and any mixtures thereof.

10. The method for gluing according to any one of the preceding claims, wherein the radiation curable adhesive composition comprises at least one radiation curable resin which comprises at least one (meth)acrylated oligomer and/or at least one (meth)acrylated monomer.

11. The method for gluing according to claim 10, wherein the at least one (meth)acrylated oligomer is selected from the group consisting of (poly)urethane (meth)acrylate oligomers, polyester (meth)acrylate oligomers, epoxy (meth)acrylate oligomers and any mixtures thereof.

12. The method for gluing according to claim 10 or claim 11, wherein the at least one (meth)acrylated monomer is selected from the group consisting of isobornyl acrylate, oxyethylated phenol acrylate, propoxylated neopentyl glycol diacrylate, dipropylene glycol diacrylate, acrylated glycerol derivative and any mixtures thereof.

13. The method for gluing according to any one of the preceding claims, wherein the radiation curable adhesive composition comprises at least one photoinitiator.

14. The method for gluing according to any one of the preceding claims, wherein the viscosity of the radiation curable adhesive composition before the exposition to the radiation is comprised from 1 Pa.s to 1000 Pa.s at 25°C.

15. The method for gluing according to any one of the preceding claims, wherein the stiffness of the radiation curable adhesive composition after the exposition to the radiations is comprised from 20 MPa to 10000 MPa.

16. A set of at least two adjacent substrates which are glued by the method for gluing according to any one of the preceding claims.

17. Use of a radiation curable adhesive composition which comprises from 0.1 wt.% to 30 wt.% of fibers compared to the total weight of the radiation curable adhesive composition, wherein the fibers have a length comprised from 100 microns to 50 mm, for gluing.
